# EUROPEAN PATENT APPLICATION

(11) **EP 2 750 263 A2**
(43) Date of publication of application: **02.07.2014**
(21) Application number: 13196796.0
(22) Date of filing: 12.12.2013
(51) Int. Cl.: H02K 1/27

(54) **Permanent magnet embedded type rotating electrical machine**

(30) Priority: 26.12.2012 JP 2012283093
(71) Applicant: Kabushiki Kaisha Toyota Jidoshokki, Kariya-shi, Aichi 448-8671 (JP)
(72) Inventor: Adaniya, Taku, Kariya-shi, Aichi 448-8671 (JP); Takimoto, Shuji, Kariya-shi, Aichi 448-8671 (JP); Hamana, Shozo, Kariya-shi, Aichi 448-8671 (JP)
(74) Representative: TBK

(57) **Abstract**

A permanent magnet embedded type rotating electrical machine includes a rotor and a stator. The rotor includes a rotor core formed by a plurality of stacked and laminated magnetic steel plates and permanent magnets. Each magnetic steel plate has a plurality of magnet holes, connecting portions and sectional areas. The sectional area is surrounded by lines extending between the opposite ends of the magnet hole and between a rotation center of the rotor and the respective ends of the magnet hole. The connecting portion is provided only inside of the sectional area and is a joining portion at which any two adjacent magnetic steel plates are joined or a fastening hole in which a fastening member is inserted. The connecting portions include both the joining portion and the fastening hole. The connecting portion provided in the sectional area is at least one of the joining portion and the fastening hole.

## Description

### BACKGROUND OF THE INVENTION

The present invention relates to a permanent magnet embedded type rotating electrical machine including a rotor having a plurality of stacked and laminated magnetic steel plates and embedded permanent magnets and a stator in which a coil is wound.

Generally, the permanent magnet embedded type rotating electrical machine includes a rotor including a rotor core formed of a plurality of stacked and laminated magnetic steel plates and a plurality of permanent magnets inserted through the rotor core in the axial direction of the rotor core. Each magnetic steel plate has formed therethrough a plurality of magnet holes at predetermined positions. Therefore, the rotor core which is made of the laminated magnetic steel plates has formed therethrough a plurality of magnet receiving holes.

In the permanent magnet embedded type rotating electrical machine according to the Japanese Patent Application Publication No. 2012-165568, the rotor has eight magnet receiving holes formed by the magnet holes of the laminated magnetic steel plates and eight rivet fixing holes formed by the rivet holes of the laminated magnetic steel plates at positions between any two adjacent magnet holes and radially inward of the magnet holes. The magnetic steel plates are fastened by four bolts inserted through four rivet holes of the eight rivet holes and nuts.

In order to reduce the weight of the permanent magnet embedded type rotating electrical machine of the above-cited Publication, the inner diameter of the magnetic steel plate may be increased. Reducing the inner diameter reduces the distance between the inner and the outer peripheries of the magnetic steel plate. Accordingly, the magnet holes are located closer to the rivet holes.

In the permanent magnet embedded type rotating electrical machine, the permanent magnets inserted in the respective magnet receiving holes of the rotor core generate magnetic flux in such a manner that a magnetic path of the magnetic flux connects between any two adjacent permanent magnets. If the magnets holes are positioned in the magnetic steel plate closer to the rivet holes as described above, the area in which magnetic flux is generated between any two adjacent permanent magnets is reduced. The presence of the rivet hole formed between any two adjacent magnet holes in the magnetic steel plate hampers the generation of the magnetic flux between any two adjacent permanent magnets, with the result that the performance of the permanent magnet embedded type rotating electrical machine may be reduced.

The plural magnetic steel plates are fixed one another by caulking, such as dowel-caulking, instead of using a rivet. The use of caulking also hampers the generation of two magnetic flux between any two adjacent permanent magnetic as in the case where the rivet holes are formed in the magnetic steel plates, with the result that the performance of the permanent magnet embedded type rotating electrical machine is also reduced.

The present invention is directed to providing a permanent magnet embedded type rotating electrical machine which ensures sufficient magnetic path of magnetic flux generated by permanent magnets of the permanent magnet embedded type rotating electrical machine and the desired performance of the permanent magnet embedded type rotating electrical machine.

### SUMMARY OF THE INVENTION

In accordance with the present invention, a permanent magnet embedded type rotating electrical machine includes a rotor and a stator. The rotor includes a rotor core formed by a plurality of stacked and laminated magnetic steel plates and a plurality of permanent magnets embedded in the rotor core. Each magnetic steel plate has a plurality of magnet holes, a plurality of connecting portions and a plurality of sectional areas. The magnet hole accommodates the permanent magnet in the magnet hole. The magnetic steel plates are fixedly connected by the connecting portions in a stacking direction. The sectional area is surrounded by lines extending between the opposite ends of the magnet hole and between a rotation center of the rotor and the respective ends of the magnet hole. The connecting portion is a joining portion at which any two adjacent magnetic steel plates are joined in the stacking direction by bending the magnetic steel plates or a fastening hole in which a fastening member is inserted to fixedly connect the magnetic steel plates. The connecting portions include both the joining portion and the fastening hole. The connecting portion is provided only inside of the sectional area. The connecting portion provided in the sectional area is at least one of the joining portion and the fastening hole.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic sectional view showing a permanent magnet embedded type rotating electrical machine according to a first preferred embodiment of the present invention;
Fig. 2 is a longitudinal sectional view showing the permanent magnet embedded type rotating electrical machine of Fig. 1;
Fig. 3 is a schematic sectional view showing a rotor of the permanent magnet embedded type rotating electrical machine of Fig. 1;
Fig. 4 is a schematic sectional view showing a steel plate with a large inner diameter of a rotor core of the rotor of the permanent magnet embedded type rotating electrical machine of Fig. 1;
Fig. 5 is a schematic sectional view showing a steel plate with a small inner diameter of the rotor core of the rotor of the permanent magnet embedded type rotating electrical machine of Fig. 1;
Fig. 6 is a partially enlarged sectional view in the circumferential direction showing caulking portions of the rotor core of the rotor of the permanent magnet embedded type rotating electrical machine of Fig. 1;
Fig. 7 is a partially enlarged sectional view in the radial direction showing the caulking portions of the rotor core of the rotor of the permanent magnet embedded type rotating electrical machine of Fig. 1;
Fig. 8 is a longitudinal sectional view showing a motor-driven compressor including the permanent magnet embedded type rotating electrical machine of Fig. 1; and
Fig. 9 is a schematic sectional view showing a magnetic steel plate of a permanent magnet embedded type rotating electrical machine according to a second preferred embodiment of the present invention.

### DETAILED DESCRIPTION OF THE PREFERRED EMBODIMENTS

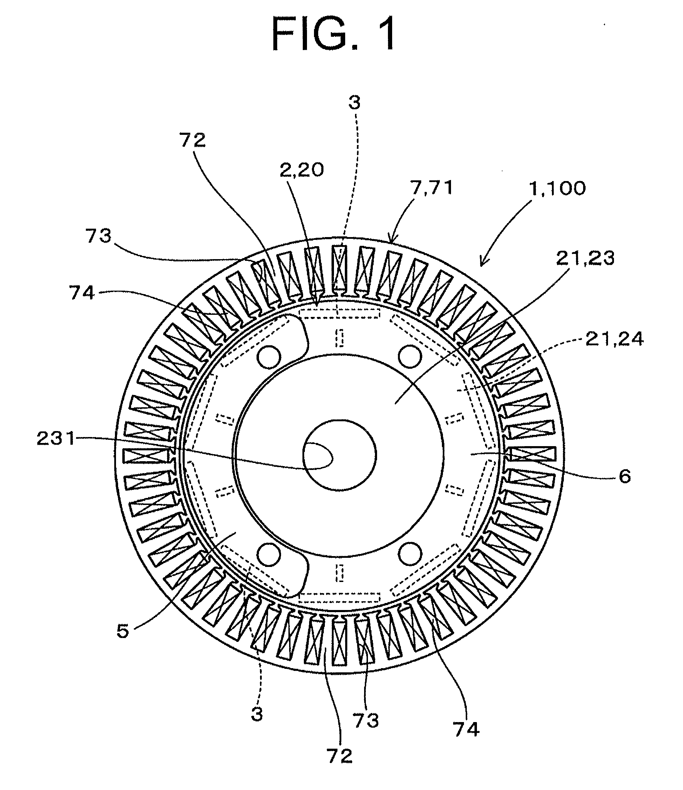

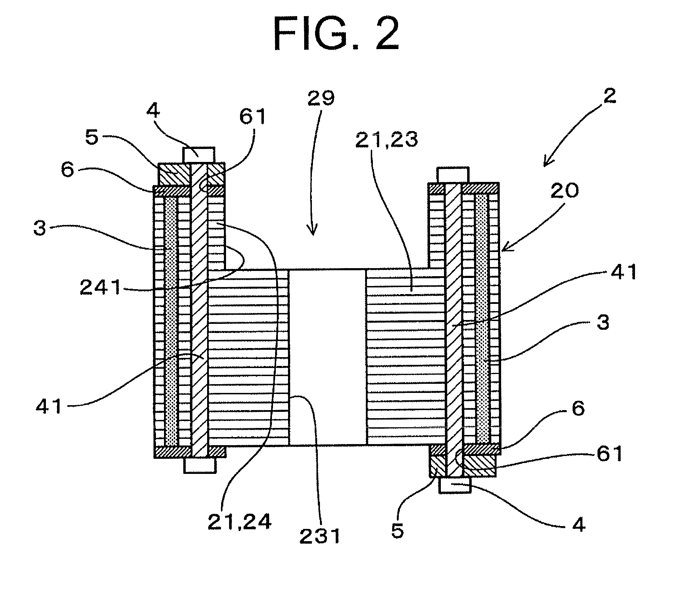

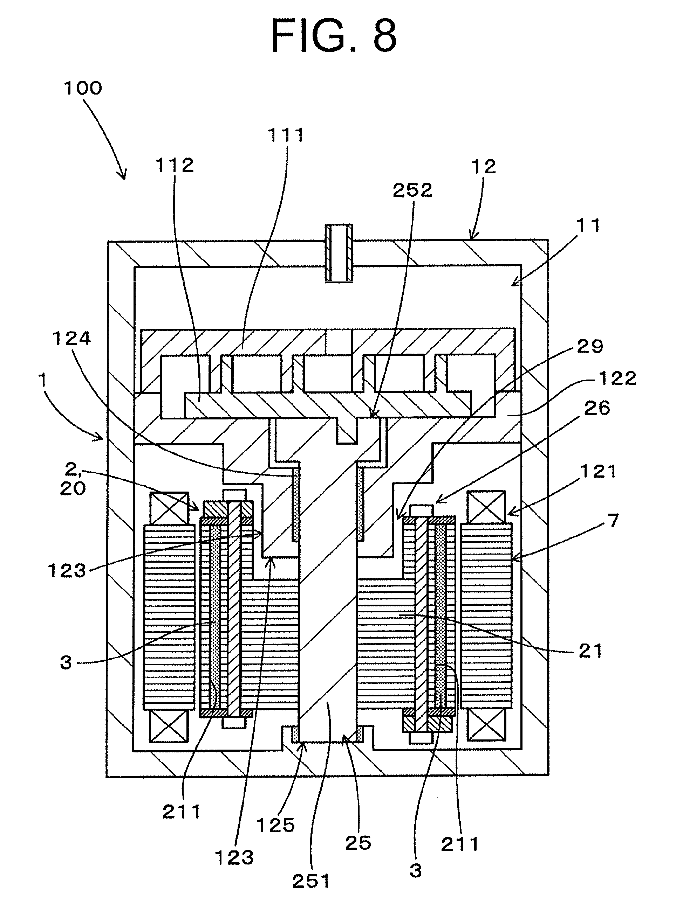

The following will describe a permanent magnet embedded type rotating electrical machine according to a first preferred embodiment of the invention with reference to Figs. 1 through 8. Referring to Figs. 2 and 8, reference numeral 1 designates a permanent magnet embedded type rotating electrical machine (hereinafter referred to simply as "rotating electrical machine"). The rotating electrical machine 1 includes a rotor 2 including a rotor core 20 formed by a plurality of stacked and laminated magnetic steel plates 21 and a plurality of permanent magnets 3 embedded in the rotor core 20 and a stator 7 having a coil 74.

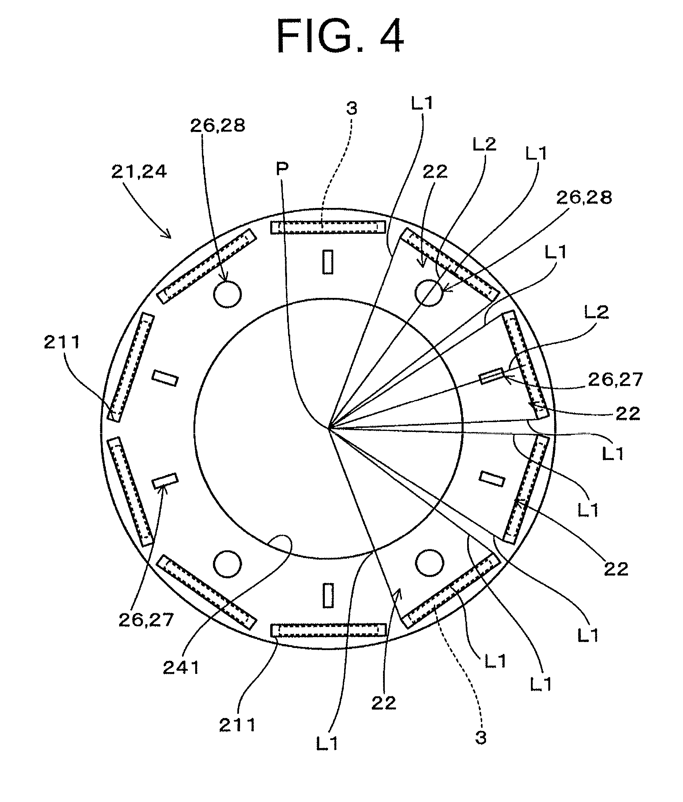

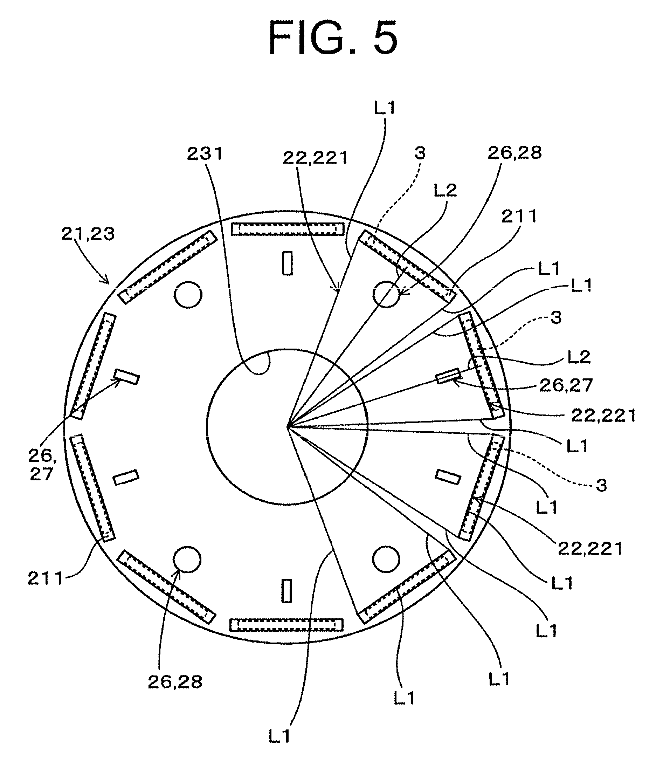

Referring to Figs. 4 and 5, each magnetic steel plate 21 has a plurality of magnet holes 211 for forming a magnet receiving holes accommodating therein the permanent magnets 3, a plurality of connecting portions 26 and a plurality of sectional areas 22. The magnetic steel plates 21 are fixedly connected by a plurality of the connecting portions 26 in the stacking direction. The magnet holes 211 are formed in the magnetic steel plates 21 in the circumferential direction of the rotor 2 about the rotation center P. Each sectional area 22 is surrounded by three lines L1 shown in Figs. 4 and 5 which extend between the opposite ends of the magnet hole 211 and between the rotation center P of the rotor 2 and the respective ends of the magnet hole 211. Each connecting portion 26 is provided inside of the sectional area 22.

As shown in Fig. 8, the rotating electrical machine 1 of the present embodiment is used in a motor-driven compressor 100. The motor-driven compressor 100 includes a compression mechanism 11 configured to compress a refrigerant gas, the rotating electrical machine 1 configured to drive the compression mechanism 11 and a housing 12 accommodating therein the compression mechanism 11 and the rotating electrical machine 1. The housing 12 has formed therein a motor chamber 121 for accommodating therein the rotating electrical machine 1. The motor-driven compressor 100 further includes a frame 122 provided in the housing 12 for separating between the motor chamber 121 and the compression mechanism 11 and supporting a rotary shaft 25 of the rotating electrical machine 1.

The compression mechanism 11 includes a fixed scroll member 111 and a movable scroll member 112. The movable scroll member 112 orbits around the rotary shaft 25 with the rotation of the rotary shaft 25 of the rotating electrical machine 1. The movable scroll member 112 is rotatably connected to the rotary shaft 25 at a position eccentric with respect to the center of the rotary shaft 25. With the rotation of the rotary shaft 25 of the rotating electrical machine 1, the movable scroll member 112 orbits around the rotary shaft 25 to compress refrigerant gas between the movable scroll member 112 and the fixed scroll member 111.

The frame 122 is provided in the housing 12 for dividing the housing 12 into the compression mechanism 11 and the motor chamber 121. The frame 122 is fixedly mounted to the housing 12 and includes a frame shaft support 123 which rotatably supports the rotary shaft 25 at a part thereof, as shown in Fig. 8. A bearing 124 is mounted between the rotary shaft 25 and the frame shaft support 123. The frame shaft support 123 extends along the rotary shaft 25 in such a way that a part of the frame shaft support 123 overlaps with a part of the rotor core 20 in the axial direction thereof. In other words, a part of the frame shaft support 123 is provided in an accommodation space 29 formed in the rotor core 20, as shown in Fig. 8. The housing 12 has a housing shaft support 125 at a position corresponding to the end of the rotary shaft 25 opposite from the compression mechanism 11 for rotatably supporting the rotary shaft 25.

The rotating electrical machine 1 with the rotor core 20 having the embedded permanent magnets 3 is an interior permanent magnet motor (IPM motor). The stator 7 of the rotating electrical machine 1 is fixedly mounted to the housing 12 and the rotor 2 is provided radially inward of the stator 7 for rotation with the rotary shaft 25. As shown in Fig. 1, the stator 7 includes an annular stator core 71, a plurality of teeth 72 formed along the entire inner periphery of the stator core 71, a plurality of slots 73 formed between any two adjacent teeth 72 and a coil 74 wound in the slots 73.

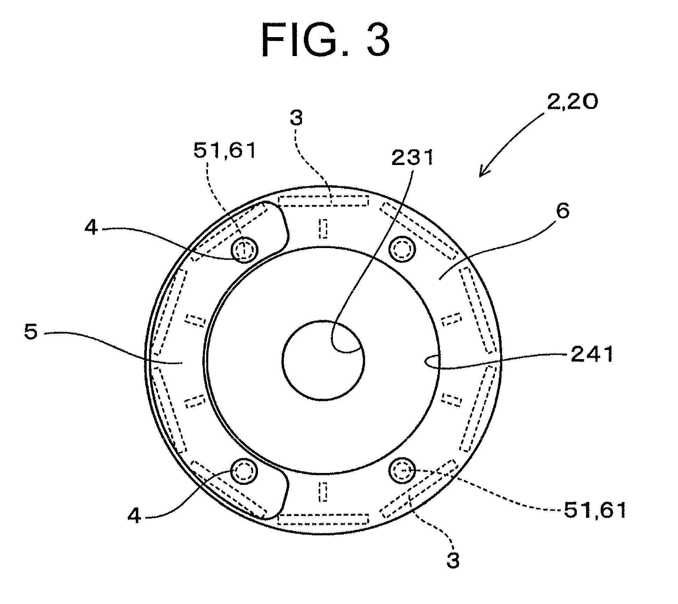

As shown in Figs. 2 and 3, the rotor 2 includes the rotor core 20 formed of a plurality of the magnetic steel plates 21 laminated together, a plurality of the permanent magnets 3 inserted through the rotor core 20, the rotary shaft 25 shown in Fig. 8, a pair of annular end plates 6 mounted to the rotor core 20 at the opposite ends of the rotor core 20 and two balance weights 5 mounted to the end plates 6 opposite from the rotor core 20.

As shown in Fig. 2, the magnetic steel plates 21 of the rotor core 20 includes two kinds of magnetic steel plates, namely small inner diameter steel plates 23 and large inner diameter steel plates 24. The small inner diameter steel plate 23 and the large inner diameter steel plate 24 have a disk shape. Each of the small inner diameter steel plate 23 and the large inner diameter steel plate 24 includes a plurality of the magnet holes 211 and a plurality of the connecting portions 26 formed at a position radially inward of the magnet holes 211 and adjacent to the rotation center P. The small inner diameter steel plate 23 has a shaft hole 231 of a small diameter through which the rotary shaft 25 is inserted and the large inner diameter steel plate 24 has a large hole 241 of a diameter larger than that of the shaft hole 231.

As shown in Figs. 4 and 5, ten magnet holes 211 each having a rectangular shape are provided in the magnetic steel plates 21 (small inner diameter steel plate 23 or large inner diameter steel plate 24) and spaced along the entire circumference of the magnetic steel plate 21 at an equidistant interval. Each connecting portion 26 includes a joining portion 27 at which any two adjacent magnetic steel plates 21 are joined in the stacking direction by bending part of the magnetic steel plates 21 or a fastening hole 28 through which rivets 4 are inserted. According to the first preferred embodiment, ten connecting portions 26 are formed of six joining portions 27 and four fastening holes 28. Each connecting portion 26 is provided in the sectional area 22 of the small inner diameter steel plate 23.

The sectional area 22 has a substantially triangle shape surrounded by three lines L1 including two lines L1 connecting between the rotation center P of the rotor 2 and the opposite ends of the magnet holes 211 and one line L1 connecting between the opposite ends of the magnet holes 211. The boundary line of the connecting portion 26 as seen in Figs. 4 and 5 is positioned within the sectional area 22 without intersecting with the lines L1.

Each connecting portion 26 is located in the sectional area 22 at a position on a line L2 which connects between the rotation center P and the center of the line L1 connecting between the opposite ends of the magnet hole 211. As shown in Figs. 4 and 5 each connecting portion 26 is positioned such that the center of the connecting portion 26 is located on the line L2 and faces the lateral center of the permanent magnet 3.

As shown in Figs. 4 and 5, the fastening holes 28 are formed in the sectional areas 22 in such a way that either one or two sectional areas 22 for the joining portion 27 is or are located between any two of the sectional areas 22 for the fastening hole 28.

The four fastening holes 28 each having a circular shape are located radially inward of the magnet holes 211 for forming rivet fixing holes of the rotor core 20 each configured to receive therein a rivet 4 having a head at one end thereof, as shown in Fig. 2. The rivet 4 serves as a fastening member.

Each magnetic steel plate 21 has six joining portions 27 located radially inward of the magnet holes 211. Each joining portion 27 extends out from the magnetic steel plate 21 in one stacking direction and has a substantially V-shaped cross-section in the radial direction of the magnetic steel plate 21. The joining portion 27 has a substantially linear cross-section in the circumferential direction of the magnetic steel plate 21 and the opposite ends of the circumference of the joining portion 27 are cut. The joining portion 27 is not limited to have the above-described shape. Alternatively, the joining portion 27 may have a substantially V-shaped cross-section in the circumferential direction of the magnetic steel plate 21 and have a substantially linear cross-section in the radial direction of the magnetic steel plate 21.

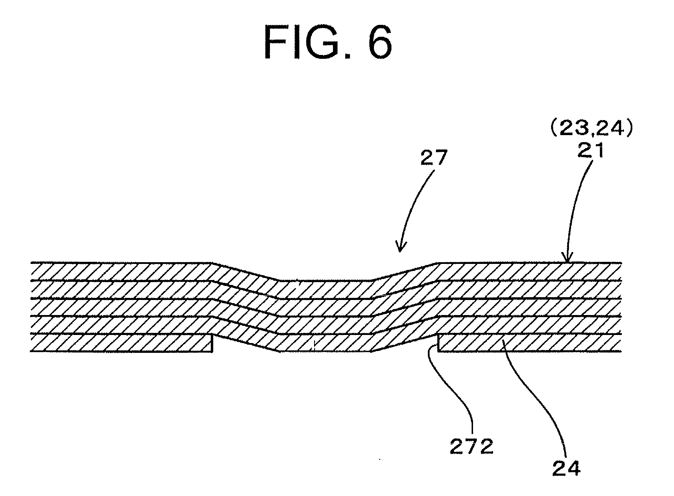

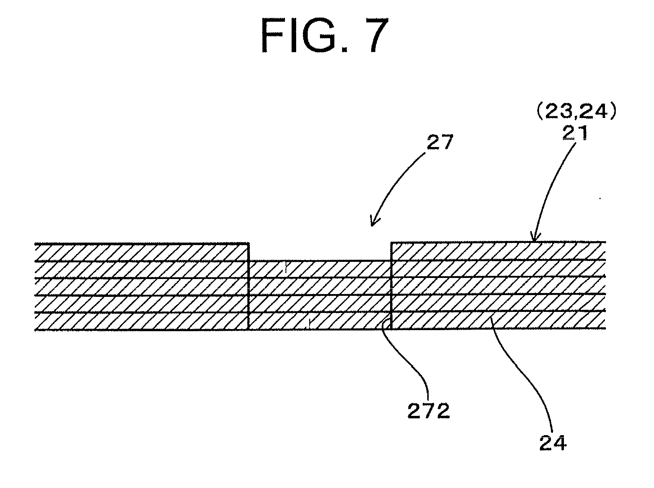

As shown in Figs. 6 and 7, the large inner diameter steel plate 24 provided at one staking end of the rotor core 20 has a hole 272 instead of the joining portion 27. The shape of the hole 272 as seen from the stacking direction is substantially the same as the outer shape of the joining portion 27.

As described above, the connecting portions 26 are provided in all sectional areas 22 of the magnetic steel plate 21. All sectional areas 22 have the connecting area 221. Various shapes may be employed for the joining portion 27. According to the present invention, the joining portion 27 has a substantially V-shaped cross-section. Alternatively, the joining portion 27 may have an arcuate shape or a rectangular shape.

As shown in Fig. 5, the shaft hole 231 formed through the small inner diameter steel plate 23 at the center thereof has a diameter that corresponds to the diameter of the rotary shaft 25. With the rotary shaft 25 inserted through a shaft receiving hole of the rotor core 20 formed by the shaft holes 231 of the small inner diameter steel plate 23, the small inner diameter steel plates 23 are fixedly fitted on the rotary shaft 25 for rotation therewith.

As shown in Fig. 4, the large hole 241 formed through the large inner diameter steel plate 24 at the center thereof has a diameter that is larger than that of the shaft hole 231 and the frame 122 is provided in the housing 12 such that part of the frame 122 is inserted in the accommodation space 29 formed by the large holes 241 of the laminated large inner diameter steel plates 24.

As shown in Fig. 4 and 5, no connecting portion 26 is formed in the magnetic steel plate 21 other than the sectional areas 22. The area of the magnetic steel plate 21 that is radially inward of the magnet hole 211 and radially outward of the shaft hole 231 or the large hole 241 is substantially flat and has no hole, recess or projection.

As shown in Figs. 2 and 3, each magnet hole 211 of the rotor core 20 has the permanent magnet 3 embedded therein. As shown in Fig. 1, the permanent magnet 3 has a substantially rectangular shape as seen from an axial end of the rotor core 20 and the long side of the rectangular shape of the permanent magnet 3 is the magnetic pole face. The permanent magnet 3 has substantially the same length as the axial length of the rotor core 20. The permanent magnet 3 has a rectangular parallelepiped shape and is integrally formed with the rotor core 20. The permanent magnets 3 are disposed such that magnetic fux is generated between any two adjacent permanent magnets 3.

As shown in Fig. 3, each end plate 6 disposed at the opposite axial ends of the rotor core 20 has an annular shape and has formed therethrough two plate holes 61 at positions corresponding to the fastening holes 28 of the magnetic steel plate 21. Each annular end plate 6 has substantially the same inner diameter as that of the large hole 241 and the same outer diameter as that of the large inner diameter steel plate 24.

As shown in Figs. 2 and 3, the two balance weights 5 are provided on the opposite axial ends of the rotor core 20, respectively, and have an arcuate shape extending along the end plate 6 and having an under-semicircular shape. The balance weight 5 has formed therethrough two weight holes 51 at positions corresponding to the fastening holes 28 of the magnetic steel plate 21. Though, only one balance weight 5 is shown in Fig. 3, the two balance weights 5 are disposed at positions symmetrical about the rotation center P of the rotor core 20 and spaced angularly from each other at an angle of about 180 degrees.

As shown in Figs. 2, 6 and 7, the small inner diameter steel plates 23 includes layers of a plurality of the small inner diameter steel plates 23 each having the joining portion 27 and layers of a plurality of the large inner diameter steel plates 24 each having the joining portion 27 and one large inner diameter steel plate 24 having the hole 272. These layers of the small inner diameter steel plates 23 and the large inner diameter steel plates 24 are stacked and pressed with the joining portions 27 of the small inner diameter steel plates 23 and the large inner diameter steel plates 24 and the hole 272 of the large inner diameter steel plate 24 positioned in alignment with each other.

All magnetic steel plates 21 are thus fixedly connected one another by caulking between any adjacent joining portions 27 of the magnetic steel plates 21 and between the joining portion 27 and the hole 272 of the magnetic steel plates 21. The two end plates 6 and the two balance weights 5 are fixedly mounted to the opposite axial ends of the laminated magnetic steel plates 21, respectively, by a pair of the rivets 4.

The accommodation space 29 is formed in the rotor core 20 by the inner peripheral surfaces of the large inner diameter steel plates 24 and the surface of the uppermost small inner diameter steel plate 23 adjacent to the lowermost large inner diameter steel plate 24. A part of the frame shaft support 123 of the frame 122 is accommodated in the accommodation space 29 and a part of the frame shaft support 123 overlaps with a part of the rotor core 20 in the accommodation space 29.

The rotary shaft 25 inserted through the shaft receiving hole formed by the shaft holes 231 of the small inner diameter steel plates 23 of the rotor core 20 includes a main shaft body 251 having a cylindrical shape and a shaft head 252 formed at one end of the main shaft body 251. The outer diameter of the main shaft body 251 corresponds to the inner diameter of the shaft hole 231 of the small inner diameter steel plate 23 so that the main shaft body 251 may be fixedly fitted in the shaft receiving hole formed by the shaft holes 231 of the small inner diameter steel plates 23. The head portion 252 is connectable to the movable scroll member 112 of the compression mechanism 11.

The rotary shaft 25 inserted through the frame shaft support 123 is fixedly connected to the rotor core 20 thereby to form the rotor 2. Through not shown in the drawing, the rotary shaft 25 is connected to the rotor core 20 by means of a key formed with one of the small inner diameter steel plates 23 and the rotary shaft 25 and a key groove formed in the other of the small inner diameter steel plates 23 and the rotary shaft 25. The rotor 2 and the stator 7 configured as described above cooperate to form the rotating electrical machine 1 which is used in the motor-driven compressor 100.

The following will describe advantageous effects of the first preferred embodiment of the present invention. The connecting portions 26 of the rotor 2 of the rotating electrical machine 1 are disposed within the sectional areas 22. Thus, the interference of generation of magnetic flux may be prevented by the connecting portions 26. In the rotor 2, the magnetic flux is generated in the magnetic steel plate 21 in a manner so as to connect any two adjacent permanent magnets 3 with each other in the area that is radially inward of the magnet holes 211. Specifically, the magnetic flux is generated in the magnetic steel plate 21 in a manner so as to connect the area of a magnetic steel plate 21 on the clockwise side thereof with respect to the line L2 extending from the permanent magnet 3 embedded in the magnetic steel plate 21 and the area of a magnetic steel plate 21 on the counterclockwise side thereof with respect to the line L2 extending from the permanent magnet 3 located adjacent to the above permanent magnet 3.

If the connecting portions 26 are disposed between any two adjacent permanent magnets 3 along the circumferential direction of the magnetic steel plate 21, the connecting portions 26 tend to prevent the generation of magnetic flux. The connecting portion 26 disposed in the sectional area 22 of the magnetic steel plate 21 offers less hindrance against the generation of magnetic flux in the magnetic steel plate 21 and ensures sufficient magnetic path of the magnetic flux of the permanent magnet 3, with the result that magnetic flux may be stably generated between any two adjacent permanent magnets 3.

Each connecting portion 26 is disposed on the line L2 which connects the rotation center P and the center of the line L1 connecting between the opposite ends of the magnet hole 211, which reduces the influence of the connecting portion 26 on the generation of magnetic flux. As a result, magnetic flux may be stably generated between any two adjacent permanent magnets 3.

Each sectional area 22 includes only the connecting area 221 within which the connecting portion 26 is disposed. In other words, the connecting portion 26 is disposed only within the sectional area 22, which helps to stabilize and uniform the magnetic flux generated between any two adjacent permanent magnets 3. The connecting portions 26 are disposed in the magnetic steel plates 21 in a well-balanced manner, so that the plural magnetic steel plates 21 are stably connected to one another.

The connecting portions 26 includes the joining portions 27 which connect any two adjacent magnetic steel plates 21 with each other and the fastening holes 28 which form the rivet fixing holes of the rotor core 20 in which the rivets 4 are inserted to fixedly connect the magnetic steel plates 21. The magnetic steel plates 21 are temporally connected by the joining portions 27 thereof, which helps to facilitate the transfer of a plurality of the magnetic steel plates 21 in a production process. The use of the fastening holes 28 for fixedly connecting the magnetic steel plates 21 allows reliable fixing of the magnetic steel plates 21. The fastening holes 28 and the joining portions 27 are configured so as to offer less hindrance against the generation of magnetic flux in the magnetic steel plate 21, so that the performance of the rotor 2 may be sufficiently ensured.

The balance weights 5 are disposed on the opposite end surfaces of the rotor core 20 and fixedly connected with the magnetic steel plates 21 by the rivets 4 inserted in the rivet fixing holes of the rotor core 20. Thus, the balance weight 5 and the magnetic steel plates 21 may be fixed easily by the common rivets 4. Therefore, the rotor 2 for use in the rotating electrical machine 1 of the motor-driven compressor 100 may be made easily.

According to the rotating electrical machine 1 of the first preferred embodiment, the magnetic path of magnetic flux generated by the permanent magnets 3 is sufficiently ensured, so that the desired performance of the rotating electrical machine 1 may be achieved.

In the first preferred embodiment of the present invention, the rotating electrical machine 1 having the rotor 2 is used for the motor-driven compressor 100, but it is not limited to the use for a motor-driven compressor. The rotating electrical machine 1 having the rotor 2 may be used for various kinds of apparatuses. In the first preferred embodiment of the present invention, the permanent magnet 3 has a rectangular shape as seen in the axial direction of the rotor 2. The permanent magnet 3 may have an arcuate shape.

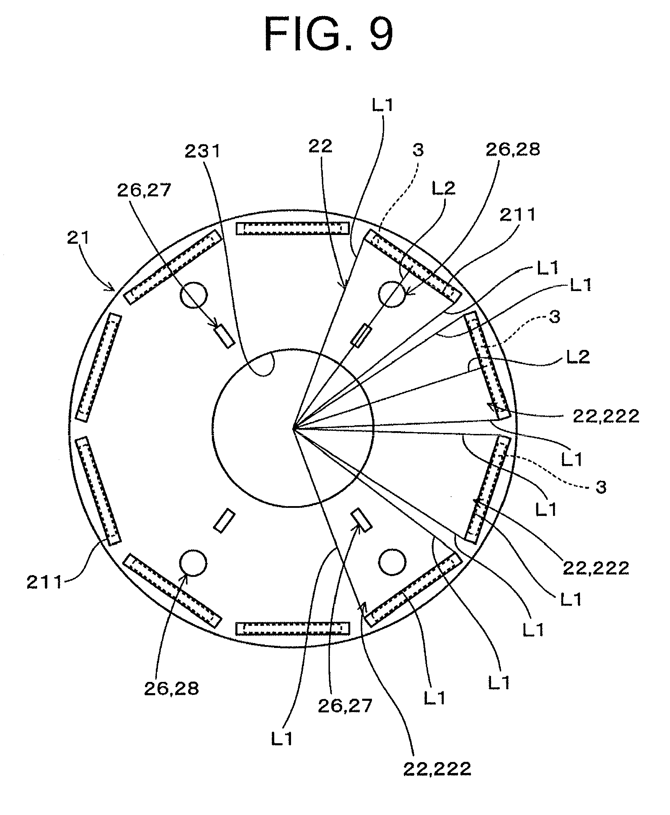

The following will describe a second preferred embodiment of the present invention with reference to Fig. 9. The second preferred embodiment differs from the first preferred embodiment in the number and the position of the connecting portions 26 of the rotating electrical machine 1. The magnetic steel plate 21 of the second preferred embodiment has substantially the same structure as the small inner diameter steel plate 23 of the first preferred embodiment except the number and the position of the connecting portions 26.

As shown in Fig. 9, the magnetic steel plate 21 includes eight connecting portions 26 of four fastening holes 28 and four joining portions 27 formed therein. Four fastening holes 28 are formed in the sectional areas 22 at positions that are radially inward of four magnet holes 211, respectively. Four joining portions 27 are formed in the sectional areas 22 in which the fastening holes 28 are formed, at positions that are radially inward of the fastening holes 28, respectively. One or two sectional areas 22 having therein no connecting portion 26 are located between any two adjacent sectional areas 22 each having one fastening hole 28 and one joining portion 27.

In the second preferred embodiment of Fig. 9, the magnetic steel plate 21 has the sectional areas 22 including four connecting areas 221 within which the connecting portion 26 is disposed and six non-connecting areas 222 within which no connecting portion 26 is formed. The rest of the structure is substantially the same as that of the first preferred embodiment.

The rotating electrical machine 1 having the magnetic steel plate 21 of Fig. 9 improves the freedom of arrangement of the connecting portion 26 and reduces the influence of the connecting portion 26 on magnetic flux. The second preferred embodiment offers the same advantageous effects as the first preferred embodiment. In addition, the number and the position of the connecting portions 26 according to the first and the second preferred embodiments are just examples and the number and the position of the connecting portions 26 may be changed in various ways.

A permanent magnet embedded type rotating electrical machine includes a rotor and a stator. The rotor includes a rotor core formed by a plurality of stacked and laminated magnetic steel plates and permanent magnets. Each magnetic steel plate has a plurality of magnet holes, connecting portions and sectional areas. The sectional area is surrounded by lines extending between the opposite ends of the magnet hole and between a rotation center of the rotor and the respective ends of the magnet hole. The connecting portion is provided only inside of the sectional area and is a joining portion at which any two adjacent magnetic steel plates are joined or a fastening hole in which a fastening member is inserted. The connecting portions include both the joining portion and the fastening hole. The connecting portion provided in the sectional area is at least one of the joining portion and the fastening hole.

## Claims

1. A permanent magnet embedded type rotating electrical machine (1) comprising:
a rotor (2) including:
a rotor core (20) formed by a plurality of stacked and laminated magnetic steel plates (21); and
a plurality of permanent magnets (3) embedded in the rotor core (20); and
a stator (7) having a coil (74),
**characterized in that** each magnetic steel plate (21) has a plurality of magnet holes (211), a plurality of connecting portions (26) and a plurality of sectional areas (22), the magnet hole (211) accommodates the permanent magnet (3) in the magnet hole (211), the magnetic steel plates (21) are fixedly connected by the connecting portions (26) in a stacking direction, the sectional area (22) is surrounded by lines (L1) extending between the opposite ends of the magnet hole (211) and between a rotation center (P) of the rotor (2) and the respective ends of the magnet hole (211), the connecting portion (26) is a joining portion (27) at which any two adjacent magnetic steel plates (21) are joined in the stacking direction by bending the magnetic steel plates (21) or a fastening hole (28) in which a fastening member (4) is inserted to fixedly connect the magnetic steel plates (21), the connecting portions (26) include both the joining portion (27) and the fastening hole (28), the connecting portion (26) is provided only inside of the sectional area (22), and the connecting portion (26) provided in the sectional area (22) is at least one of the joining portion (27) and the fastening hole (28).

2. The permanent magnet embedded type rotating electrical machine (1) according to claim 1, **characterized in that** the connecting portion (26) is disposed on a line (L2) connecting the rotation center (P) and a center of the line (L1) connecting between the opposite ends of the magnet hole (211).

3. The permanent magnet embedded type rotating electrical machine (1) according to claim 1 or 2, **characterized in that** the sectional areas (22) include connecting areas (221) within which the connecting portion (26) is disposed and non-connecting areas (222) within which no connecting portion (26) is disposed.

4. The permanent magnet embedded type rotating electrical machine (1) according to any one of claims 1 through 3, **characterized in that** the connecting portions (26) provided in the sectional area (22) are both the joining portion (27) and the fastening hole (28), and the joining portion (27) is formed in the sectional area (22) at a position radially inward of the fastening hole (28).

5. The permanent magnet embedded type rotating electrical machine (1) according to claim 1 or 2, **characterized in that** the sectional areas (22) include only the connecting areas (221) within which the connecting portion (26) is disposed.

6. The permanent magnet embedded type rotating electrical machine (1) according to claim 5, **characterized in that** the connecting portion (26) provided in the sectional area (22) is either the joining portion (27) or the fastening hole (28).

7. The permanent magnet embedded type rotating electrical machine (1) according to claim 1, **characterized in that** balance weights (5) are disposed on the opposite end surfaces of the rotor core (20) and fixedly connected with the magnetic steel plates (21) by the fastening members (4) inserted in the fastening holes (28).
